Europäisches Patentamt

European Patent Office

Office européen des brevets

(19)

(11) Numéro de publication : **0 153 887**

**B1**

(12) **FASCICULE DE BREVET EUROPÉEN**

(45) Date de publication du fascicule du brevet :
27.05.87

(21) Numéro de dépôt : 85400195.5

(22) Date de dépôt : 06.02.85

(51) Int. Cl.⁴ : **F 01 D 25/04**, F 16 F 15/32,
G 01 M 1/36

(54) **Dispositif et outillage de correction de balourd d'un rotor de turbomachine et procédé pour la mise en oeuvre.**

(30) Priorité : 22.02.84 FR 8402646

(43) Date de publication de la demande :
04.09.85 Bulletin 85/36

(45) Mention de la délivrance du brevet :
27.05.87 Bulletin 87/22

(84) Etats contractants désignés :
DE FR GB

(56) Documents cités :
EP-A- 0 058 122
FR-A- 1 404 239
FR-A- 1 477 752
GB-A- 1 019 519

(73) Titulaire : **SOCIETE NATIONALE D'ETUDE ET DE CONSTRUCTION DE MOTEURS D'AVIATION, "S.N.E.C.M.A."**
**2 Boulevard Victor**
**F-75015 Paris (FR)**

(72) Inventeur : **Holz, Robert Gustave**
**rue de Pouilly "Le Manoir"**
**Vert St Denis F-77240 Cesson (FR)**
Inventeur : **Vercherin, Denis Jean Noel**
**10, rue des Fossés**
**F-53000 Laval (FR)**

(74) Mandataire : **Moinat, François**
**S.N.E.C.M.A. Service des Brevets Boîte Postale 81**
**F-91003 Evry Cedex (FR)**

Jouve. 18. rue St-Denis. 75001 Paris. France

## Description

L'invention concerne un dispositif et un outillage de correction de balourd d'un rotor de turbomachine, ledit dispositif comprenant deux masses constituées par des éléments de disque comportant des dentures et dont la position angulaire relative peut être modifiée contre l'action d'un ressort par un outillage introduit par l'avant. Elle concerne également un procédé de mise en œuvre du dispositif et de l'outillage.

L'équilibrage des rotors de turbomachines, disque par disque, laisse généralement subsister, au niveau des paliers, des balourds résiduels qui provoquent des vibrations préjudiciables au confort des passagers et à la durée de vie du matériel.

De nombreux dispositifs ont été réalisés mais ils demandent souvent une mise en œuvre délicate ou une modification plus ou moins importante du matériel sur lequel ils doivent être mis en service.

C'est ainsi que le brevet français 1 477 752 décrit un dispositif permettant de déterminer le balourd résiduel comportant deux masses montées dans un boîtier cylindrique fixé provisoirement sur le tourillon du rotor.

Les masses sont constituées par des secteurs de disque solidaires de moyeux prolongés par des éléments d'arbre creux terminés par un méplat. Les deux éléments d'arbre creux des masses et le troisième élément d'arbre creux fixé au fond du boîtier sont coaxiaux et susceptibles de tourner l'un par rapport à l'autre. Les masses portent à leur périphérie des dentures coopérant, sous l'action d'un ressort, avec des dentures correspondantes prévues à l'intérieur de la paroi du boîtier. Le changement de position angulaire des masses entre elles et par rapport au boîtier est obtenu à l'aide d'un outil introduit par l'avant et constitué de trois arbres coaxiaux, l'une des extrémités portant des organes d'accouplement avec les éléments d'arbres creux du dispositif et l'autre extrémité des tambours. On règle l'écartement angulaire des masses de manière à donner au balourd additionnel ainsi obtenu une valeur équivalente au balourd résiduel. On établit des courbes d'amplitude de vibrations en fonction du balourd résultant et de l'angle des masses qui permettent de déterminer la grandeur et la direction du balourd résiduel. Le dispositif est ensuite démonté et on intervient par usinage des disques pour supprimer le balourd résiduel.

Le brevet français 1 404 239 décrit un dispositif d'équilibrage de meule restant à demeure sur la machine. Il est constitué de deux masselottes en forme de secteur de cercle, fixées chacune sur un disque circulaire et logées dans un alésage central de l'arbre de meule. Un des disques porte un axe qui passe coaxialement dans l'axe creux du deuxième disque.

Les axes se prolongent à l'extérieur de l'alésage dans un boîtier constitué par trois couronnes et une plaque frontale. Les trois couronnes comportent sur leur circonférence intérieure une denture qui coopère par l'intermédiaire de pignons planétaires d'axe commun avec des pignons fixés respectivement sur les extrémités d'une douille solidaire d'une plaque de fermeture de l'alésage de l'arbre de meule, de l'axe creux solidaire de la première masselotte et de l'axe solidaire de la deuxième masselotte. La suppression du balourd s'obtient par déplacement des masselottes par rapport à l'alésage de l'arbre de meule par rotation de la première collerette puis par modification de l'écart angulaire entre les masselottes par action sur les deuxième et troisième collerettes.

L'utilisation d'un tel dispositif pour supprimer le balourd d'un rotor de turbomachine n'est pas envisageable par suite de son encombrement et des risques de déréglage en cours de fonctionnement.

L'invention a pour objet un dispositif de correction de balourd résiduel de faible encombrement, logé à demeure dans un plan proche du plan du ou des paliers supportant le rotor à équilibrer et dont la mise en place et le réglage sont aisément réalisés sans démontage important.

Le dispositif de correction, selon l'invention, est remarquable en ce que deux masselottes sont fixées à des douilles présentant à leurs extrémités des crantages dont les dents ont une forme et une direction telles que l'une des douilles a un sens unique de rotation tandis que l'ensemble des deux douilles a un sens unique de rotation contraire à celui de ladite douille.

Des moyens de repérage sont prévus sur les douilles pour permettre de repérer leur position relative et sont constitués par des doigts fixés sur les douilles de manière que lors de leur contact les masselottes sont opposées.

Les explications et figures données ci-après à titre d'exemple permettront de comprendre comment l'invention peut être réalisée.

la figure 1 est une vue en coupe axiale d'une partie de turbomachine équipée d'un dispositif de correction de balourd selon l'invention et muni de l'outillage nécessaire à son réglage ;

la figure 2A est une demi-vue en coupe axiale du dispositif de correction du balourd lors du montage de la vis d'accouplement des arbres basse pression et haute pression ;

la figure 2B est une demi-vue en coupe axiale du dispositif en position de correction ;

la figure 3 est une vue latérale des douilles portant les masses d'équilibrage ;

la figure 4 est une vue latérale semblable à la figure 3 dans laquelle les deuxième et troisième douilles sont montrées désaccouplées ;

les figures 5 et 6 sont des vues selon V-V et VI-VI de la figure 4 ;

les figures 7A et 7B montrent la position des balourds de chaque douille par rapport à l'indication des aiguilles ;

2

0 153 887

la figure 8 est la construction géométrique donnant la direction et l'amplitude du balourd résultant.

Le dispositif, objet de l'invention, s'applique en particulier mais non exclusivement à une turbomachine mono-corps dont les parties basse pression et haute pression de l'arbre central sont rendues solidaires par une vis interne située sensiblement dans le plan du palier à équilibrer.

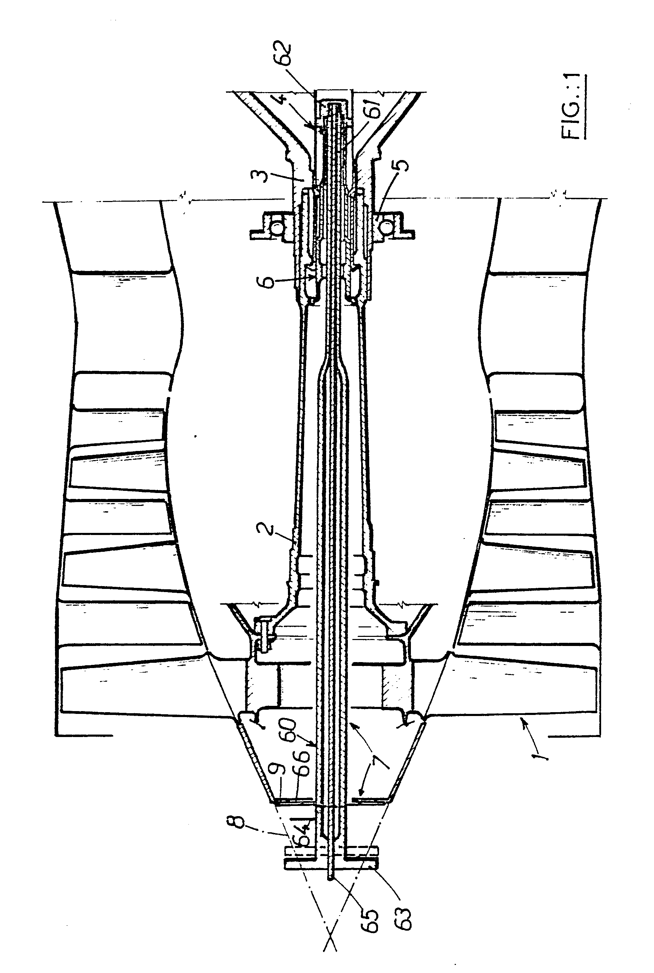

La figure 1 montre en coupe schématique l'étage basse pression 1 d'une turbomachine dont la partie basse pression de l'arbre central creux 2 est rendue solidaire de la partie haute pression 3 par une vis d'accouplement 4 cylindrique et creuse.

L'accouplement est supporté par un palier 5 qui est soumis aux effets du balourd résiduel des rotors.

Le dispositif de correction de balourd 6 conforme à l'invention est réalisé à l'intérieur de la vis d'accouplement 4 et est réglé à l'aide d'un outil de réglage 7, introduit en amont par l'avant de la turbomachine dans l'arbre central 2 après démontage du cône d'entrée 8 fixé sur la bride 9 de fixation du cône.

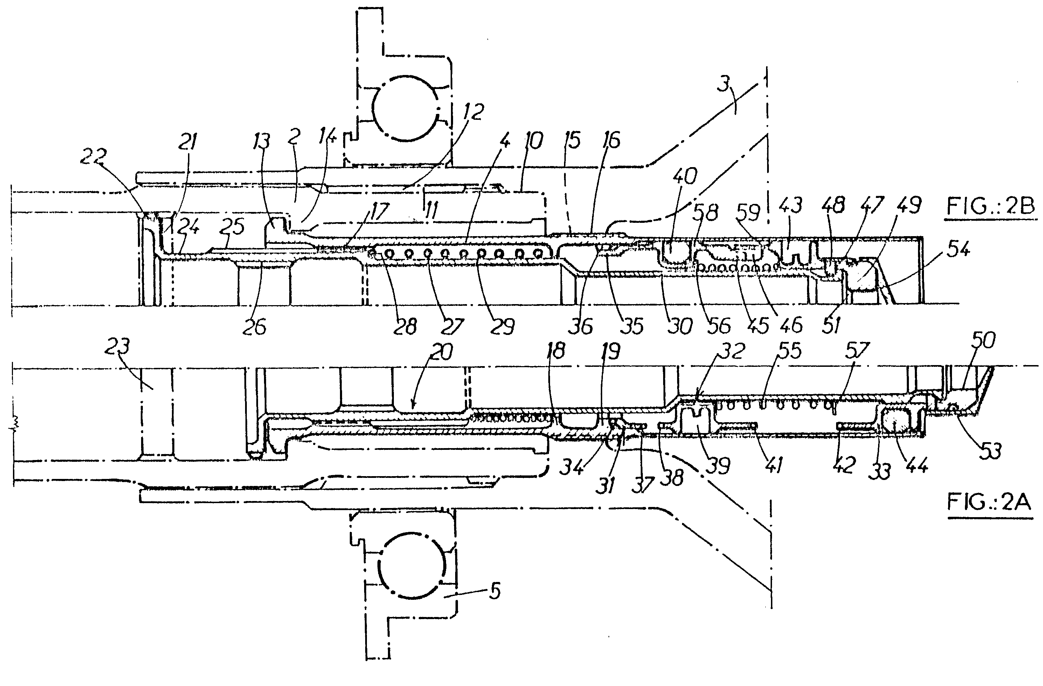

Comme représenté plus en détail sur les figures 2A et 2B, l'extrémité amont de l'arbre haute pression 3 présente un chambrage 10 dans lequel vient se loger en butée l'extrémité aval de l'arbre basse pression 2. L'extrémité de l'arbre basse pression 2 présente à sa surface extérieure des dentures 11 qui coopèrent avec des dentures 12 correspondantes prévues dans le chambrage 10 et assurent l'entraînement en rotation de l'arbre haute pression.

La solidarisation des arbres dans le sens axial est assurée par la vis d'accouplement 4 qui porte à son extrémité amont un épaulement 13, dirigé vers l'extérieur, susceptible de coopérer avec un épaulement 14 prévu sur la surface intérieure de l'arbre basse pression 2, et à sa partie médiane un filetage extérieur 15 susceptible de coopérer avec un filetage 16 correspondant, prévu sur la face intérieure de la partie d'arbre haute pression 3, s'étendant en aval du fond du chambrage 10. Le vissage du filetage 15 de la vis 4 dans le taraudage 16 de l'arbre haute pression met en contact l'épaulement 13 de la vis et l'épaulement 14 de l'arbre basse pression. L'extrémité de l'arbre basse pression est ainsi amenée en butée contre le fond du chambrage 10 et par suite les deux arbres se trouvent bloqués axialement l'un contre l'autre.

La paroi intérieure de la vis 4 est aménagée pour recevoir le dispositif de correction de balourd proprement dit et permettre l'emploi d'un outillage de mise en place de la vis d'accouplement et du dispositif de correction. Selon l'exemple de réalisation montré sur les figures 2A et 2B, la vis 4 porte sur sa paroi interne près de son extrémité amont des cannelures axiales 17 et, proche de sa partie médiane, deux épaulements 18 et 19 dont les fonctions seront précisées ultérieurement. Un manchon de blocage 20 est logé dans la vis 4 et présente à son extrémité amont un collet 21 dont la périphérie porte une denture 22 susceptible de coopérer avec une denture homologue 23 prévue sur la paroi intérieure de l'arbre basse pression. Le manchon présente trois parties dont les diamètres vont en décroissant d'amont en aval. La partie de manchon de plus grand diamètre 24, terminée par le collet 21, porte sur au moins une partie de ses surfaces extérieure et intérieure des cannelures axiales 25 et 26. Les cannelures 25 de relativement grande longueur coopèrent avec les cannelures 17 prévues à l'intérieur de la vis 4 pour permettre l'entraînement en rotation de ladite vis sous l'action d'un outil coopérant avec les cannelures 26. La deuxième partie 27 du manchon 20 a un diamètre lui permettant de coulisser dans l'alésage défini par l'épaulement 18. Le raccordement de la deuxième partie de manchon 27 sur la première partie 24 forme un décrochement 28 contre lequel s'appuie l'extrémité d'un ressort hélicoïdal 29, travaillant en compression.

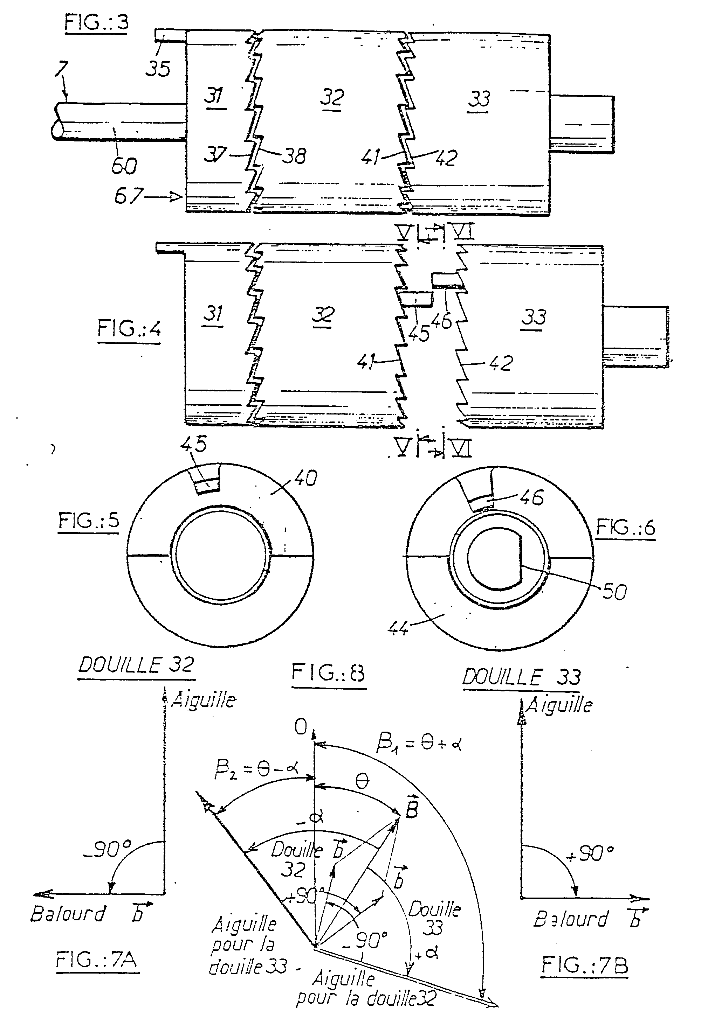

L'autre extrémité du ressort est maintenue contre l'épaulement 18. La troisième partie du manchon recouvre les douilles 31, 32 et 33 formant le système de correction. La figure 3 est une vue latérale des trois douilles en position de compensation de balourd. La première douille 31 vient en butée par son bord amont 34 contre l'épaulement 19. Ledit bord porte une languette 35 qui coopère avec une échancrure 36 de l'épaulement 19 afin de le bloquer en rotation. Le bord aval de la douille 31 porte un crantage 37 qui est susceptible de s'engrener avec un crantage correspondant 38 du bord amont de la deuxième douille 32.

La deuxième douille 32 comporte en outre une cage annulaire 39 de section approximativement rectangulaire qui maintient une masselotte 40 en forme de secteur annulaire. Le bord aval de l'anneau 39 porte un crantage 41 susceptible de coopérer avec un crantage correspondant 42 du bord amont de la troisième douille 33.

La direction des crantages 37, 38 et 41, 42 des trois douilles est prévue de manière que la rotation de la douille 33, dans, par exemple, le sens inverse des aiguilles d'une montre (vu d'amont face au crantage 42), entraîne le crantage 41 de la douille 32 tandis que le crantage 38 de la douille 32 glisse sur le crantage 37 de la douille 31. L'engrènement des crantages 38 et 37 se produit uniquement lorsque la douille 32 et son crantage 38 sont sollicités dans le sens des aiguilles d'une montre.

La troisième douille 33 porte, comme la deuxième, une cage annulaire 43 qui maintient une masselotte 44 en forme de secteur annulaire, identique à la masselotte 40.

Les bords aval de la douille 32 et amont de la douille 33 portent des moyens de repérage de la position des masselottes. Selon un exemple de réalisation ces moyens sont constitués par des doigts 45 et 46 qui peuvent être mis en contact par la rotation de la douille 33 et déterminer ainsi la position relative des deux douilles et des masselottes 40 et 44.

La partie cylindrique aval de la douille 33 comporte des moyens de verrouillage axial au manchon 20 constitués de découpes 47 destinés à recevoir des secteurs 48 qui verrouillent axialement la douille 33 au manchon 20 et des moyens d'accouplement prévus au-delà de l'extrémité du manchon 20, et constitués

3

par une partie cylindrique relativement massive 49 présentant un logement 50 de diamètre inférieur à celui du manchon. Le logement est raccordé à l'extrémité du manchon par une partie conique 51 permettant le guidage de l'extrémité de l'outil de correction de balourd. Selon l'exemple de réalisation, le logement 50 est constitué d'une ouverture semi-circulaire destinée à recevoir l'extrémité de l'outil de correction.

La partie aval 49 de la douille comporte sur sa surface extérieure une gorge 53 dans laquelle les languettes du chapeau 54 sont serties.

Un deuxième ressort 55, maintenu entre deux bagues 56 et 57, est logé, entre la face extérieure annulaire aval 58 de la cage de la deuxième douille 32 et la face extérieure annulaire amont 59 de la cage de la troisième douille 33. Le ressort 55 travaille en compression et a une force moitié de celle du ressort 29. Il a pour fonction de permettre la séparation des crantages 41 et 42 des deuxième et troisième douilles 32 et 33.

Le dispositif de correction de balourd dont les éléments ont été ci-dessus décrits se montent dans la vis d'accouplement 4 de la manière suivante :

— on introduit dans la vis 4 par l'aval, la douille 31 dont la languette 35 vient se loger dans l'échancrure 36 de l'épaulement 19 de la vis ;

— on introduit par l'amont dans la vis 4, le manchon de blocage 20, sur lequel a été préalablement enfilé le ressort 29, dont on fait correspondre les cannelures 25 avec les cannelures 17 de la vis ; après avoir poussé le collet 21 du manchon en contact avec l'épaulement 13 de la vis 4, on introduit successivement par l'aval de la douille 32 de manière que le doigt 45 soit dirigé vers l'aval, la bague 56, le ressort 55, la bague 57, la douille 33 dont le doigt 46 est dirigé vers l'amont, les secteurs 48 pour verrouiller la douille 33 sur le manchon 20, puis le chapeau 54 dont on sertit les languettes dans la gorge 53 de la partie 49 de la douille.

Lorsque cet assemblage est réalisé, la vis comportant le dispositif de correction de balourd est introduite par l'ouverture amont de l'arbre basse pression à l'aide d'un outil qui porte des cannelures axiales venant en prise avec les cannelures 26 du manchon de blocage 20 et pousse le manchon vers l'aval contre l'action du ressort 29. Cette translation axiale empêche la coopération des dentures 22 du manchon et 23 de l'arbre du compresseur basse pression et l'immobilisation du manchon. Par suite de la longueur des cannelures 25 de la surface extérieure du manchon, elles se trouvent toujours en prise avec les cannelures 17 de la vis et transmettent le couple de vissage nécessaire au blocage axial des arbres basse pression et haute pression. Le vissage du filetage 15 de la vis 4 et du taraudage 16 de l'arbre basse pression est poursuivi jusqu'au blocage de l'épaulement 13 de la vis sur l'épaulement 14 de l'arbre.

Le procédé de correction du balourd utilisant un dispositif à deux masselottes est décrit ci-après.

Le principe de correction en soi connu, consiste à équilibrer le balourd résiduel Br par un balourd de direction opposé et de même amplitude, le balourd résiduel ayant été au préalable déterminé, en valeur et en direction par une méthode connue, par exemple celle qui a été exposée dans le brevet FR 1 477 752. Il sera défini comme un vecteur par son amplitude $\vec{B}$ et sa direction $\theta$ par rapport à une direction de référence. Les masselottes annulaires 40, 44 fixées dans les cages des douilles 32 et 33 créent des balourds b qui peuvent être représentés, comme sur la figure 8, en amplitude et direction par des vecteurs $\vec{b}$. On compose ces deux vecteurs pour obtenir un vecteur résultant $\vec{B}$ égal et opposé au vecteur $\vec{Br}$ représentant le balourd résiduel Br existant.

Les masselottes étant de même masse, les vecteurs $\vec{b}$ les représentant seront situés à $+ \alpha°$ et $- \alpha°$ du vecteur résultant $\vec{B}$ selon la relation $2\vec{b} \cos \alpha = \vec{B}$. Comme B et b sont connus on en déduit

$$\alpha = \text{Arc cos} \left( \frac{B}{2b} \right).$$

Les masselottes devront donc être amenées dans les directions

$$\beta_1 = \theta - \alpha \quad \text{et} \quad \beta_2 = \theta - \alpha$$

Pour appliquer ce procédé les douilles 32 et 33 seront positionnées angulairement à l'aide de l'outillage 7 représenté sur la figure 1.

Cet outillage comprend une clé 60 formé d'un tube dont au moins la partie 61, d'extrémité, prévue pour s'engager dans le dispositif de correction, a un diamètre lui permettant de passer dans la partie 30 de faible diamètre du manchon de blocage 20. L'extrémité libre de la partie 61 comporte des moyens d'accouplement susceptibles de coopérer avec les moyens d'accouplement 49, 50 prévus dans le dispositif de correction de balourd. Lesdits moyens sont constitués d'une partie cylindrique de diamètre égal au diamètre de la partie cylindrique du logement 50 de la troisième douille 33 du dispositif de correction. Sur cette partie cylindrique est usiné un méplat 62 susceptible de coopérer avec la partie plane correspondante du logement 50.

Une collerette d'appui 63 est soudée à l'autre extrémité du tube 60, ainsi qu'une aiguille de repérage 64 fixée dans une position radiale déterminée par rapport aux moyens d'accouplement 62. L'aiguille est fixée perpendiculairement à l'axe et au plan défini par le méplat 62. Une tige de contrôle 65, de longueur supérieure à celle de la clé, passe à l'intérieur du tube 60 et est destinée à contrôler l'engagement de

4

**0 153 887**

l'extrémité de l'outil dans le logement 50.

Selon un exemple de réalisation, la tige a environ un demi-centimètre de plus que la longueur comprise entre la surface de la collerette d'appui 63, lorsque l'extrémité de la clé est engagée dans le logement 50, et le fond du chapeau 54.

L'outillage comprend également un cadran gradué 66 que l'on fixe sur la bride 9 de fixation du cône 8.

Pour vérifier que la clé est bien en prise dans le logement 50, après avoir engagé la clé à l'intérieur de l'arbre et avoir recherché la prise, par rotation dans un même sens, on procède à l'enfoncement de la tige de contrôle 65 jusqu'à venir en butée contre le fond du chapeau 54. Si la clé est bien en prise, l'extrémité de la tige doit dépasser d'après l'exemple de réalisation, d'un demi-centimètre du côté de la collerette. Si l'extrémité de la tige s'enfonce complètement, la clé n'est pas en prise.

La figure 3 montre une vue latérale des douilles de correction, le manchon de blocage 20 étant dans la position représentée sur la figure 2B et l'outillage de correction 7 étant en place dans le logement semi-circulaire 50. La douille 31 est immobilisée par rapport aux arbres basse et haute pression par la languette 35.

Par suite de la forme des crantages le glissement des dents les unes par rapport aux autres n'est autorisé que dans un seul sens. Selon l'exemple de réalisation montré, lorsque l'on tourne la clé 60 dans un sens, par exemple celui des aiguilles d'une montre (vu de l'avant selon la flèche 67), la rotation s'effectue au niveau des crantages 41, 42, seule la douille 33 tourne par rapport aux douilles 31 et 32 dont les crantages 37, 38 sont bloqués.

Inversement lorsque l'on tourne la clé dans le sens contraire des aiguilles d'une montre (vu selon la flèche 67), la rotation s'effectue au niveau des crantages 37, 38 et la douille 32 tourne entraînée par le crantage 42 de la douille 33, les douilles 32 et 33 étant de ce fait solidarisées en rotation.

Pour repérer la position des deuxième 32 et troisième 33 douilles et par conséquent des masselottes par rapport à la clé, on utilise les doigts 45 et 46 (figure 4) qui ont été placés sur la périphérie des douilles de manière que lorsqu'ils sont en contact les masselottes soient diamétralement opposées.

Pour ce faire, on tourne la clé 60 dans le sens des aiguilles d'une montre, les crantages 37, 38 restant bloqués, jusqu'à ce que la clé soit bloquée, les deux doigts 45 et 46 sont alors en contact et les deux masselottes en opposition. La douille 33 est alors repérée par rapport à la douille 32.

Les angles sont mesurés de 0 à 360° dans le sens des aiguilles d'une montre, 0° étant placé en face de la direction de référence. Donc pendant le réglage, la position des balourds des deux douilles 32, 33 sont situés par rapport à l'aiguille de la clé comme indiqué sur les figures 7A et 7B c'est-à-dire à 180°.

Les directions et amplitudes des balourds $\vec{b}$ composant le balourd de correction sont données par la construction géométrique de la figure 8. Il faudra tourner l'aiguille de repérage jusqu'à l'angle $\beta 1 = \theta + \alpha 1$ pour la douille 32 et $\beta 2 = \theta - \alpha 1$ pour la cage 33. L'angle $\alpha 1$ de ces équations est le complément de l'angle $\alpha$ des formules précédemment établies et est égal à $\alpha 1 = 90° - \alpha$.

La correction du balourd résiduel s'opère comme suit :

— mise à zéro du dispositif de correction par rotation de la clé dans le sens des aiguilles d'une montre jusqu'au blocage, la deuxième douille 32 est alors repérée par rapport à la troisième douille 33 et par rapport à la clé. Les deux masselottes sont alors opposées et l'aiguille de la clé est devant une graduation du cadran que l'on prendra pour 0 (zéro) ;

— on tourne la clé dans le sens inverse des aiguilles d'une montre jusqu'à l'angle $\beta 1$. Les crantages 41, 42 étant bloqués, la rotation de la clé entraîne la rotation conjointe des douilles 33 et 32 et le crantage 38 de la douille 32 se déplace devant le crantage 37 de la douille fixe 31 ;

— on vérifie, en tournant la clé dans le sens des aiguilles d'une montre, que les dents des crantages 41 et 42 n'ont pas glissé, la rotation n'excédant pas dans ce cas quelques degrés, et que les douilles ont tourné simultanément du même angle ;

— on appuie ensuite sur la collerette 63 de la clé contre l'action du ressort 29 de façon à déplacer axialement la douille 33 pour désengrener les crantages 41 et 42 et à permettre, par une rotation dans le sens des aiguilles d'une montre de l'ordre de 45°, le passage du doigt 46 de la douille 33 de l'autre côté du doigt 45 de la douille 32 ;

— on relâche la pression sur la clé pour remettre les crantages 41 et 42 en prise. On tourne ensuite la clé dans le sens des aiguilles d'une montre jusqu'à l'angle $\beta 2$.

On retire la clé, la compensation du balourd est terminée.

## Revendications

1. Dispositif de correction de balourd (6) d'un rotor de turbomachine, ledit dispositif comprenant deux masselottes (40, 44), constituées par des éléments de disques, comportant des dentures et dont la position angulaire relative peut être modifiée contre l'action d'un ressort (29) par un outillage (7) introduit par l'avant de la turbomachine, caractérisé en ce que lesdites masselottes (40, 44) sont fixées à des douilles (32, 33) présentant à leurs extrémités des crantages (37, 38, 41, 42) dont les dents ont une forme et une direction telles que l'une des douilles (33) a un sens unique de rotation tandis que l'ensemble des deux douilles (32, 33) a un sens unique de rotation contraire à celui de ladite douille (33).

5

2. Dispositif selon la revendication 1, caractérisé en ce que des moyens de repérage (45, 46) sont prévus sur les douilles (32, 33) pour permettre de repérer leur position relative.

3. Dispositif selon la revendication 2, caractérisé en ce que les moyens de repérage sont des doigts (45, 46) fixés sur les douilles (32, 33) de manière que lors de leur contact les masselottes (40, 44) sont opposées.

4. Dispositif selon l'une des revendications 1 à 3, caractérisé en ce qu'il est monté à l'intérieur et à la périphérie d'une vis d'accouplement (4) des arbres de deux étages de pression et qu'il comporte au moins :
— un manchon de blocage (20) susceptible de coulisser dans la vis (4) et muni de moyens d'entraînement en rotation (25, 26) de la vis et d'un collet (21) portant une denture (22) susceptible de coopérer avec une denture homologue (23) prévue sur la paroi intérieure de l'arbre (2) de l'étage de pression ;
— un premier ressort de compression (29) entourant une partie (27) du manchon de blocage (20) s'appuyant à une extrémité sur un décrochement (28) du manchon et à l'autre extrémité sur un épaulement (18) de la vis d'accouplement (4) ;
— une première douille (31) maintenue fixe dans la vis (4) et présentant sur son bord aval un crantage (37) ;
— une deuxième douille (32) dont le bord amont porte un crantage (38) homologue du crantage (37) et le bord aval un autre crantage (41), une masselotte (40) étant fixée sur une partie de la paroi intérieure de la douille (32) ;
— une troisième douille (33) dont le bord amont porte un crantage (42) homologue du crantage (41) du bord aval de la douille (32), une masselotte (44) étant fixée sur une partie de la paroi intérieure de la douille (33), la partie aval de la douille portant des moyens de verrouillage axial de la douille (33) au manchon (20) et des moyens d'accouplement (49, 50) à un outillage de correction.

5. Dispositif selon la revendication 4, caractérisé en ce que les masselottes (40, 44) sont fixées dans des cages cylindriques (39, 43) prévues dans les deuxième et troisième douilles (32, 33).

6. Dispositif selon la revendication 5, caractérisé en ce qu'un deuxième ressort de compression (55) est prévu entre la face extérieure annulaire aval (58) de la cage (39) de la deuxième douille (32) et la face extérieure annulaire amont (59) de la cage (43) de la troisième douille (33), ledit ressort ayant une force environ moitié de celle du premier ressort (29).

7. Outillage pour la correction de balourd adapté au dispositif selon l'une des revendications précédentes, caractérisé en ce qu'il comporte :
— un tube clé (60) dont une extrémité porte des moyens d'accouplement (62) susceptible de coopérer avec les moyens d'accouplement (49, 50) de la troisième douille (33) du dispositif de correction et dont l'autre extrémité est munie d'une aiguille de repérage (64) fixée perpendiculairement à l'axe du tube et dans une position radiale déterminée par rapport aux moyens d'accouplement et d'une collerette d'appui (63) permettant d'exercer une pression axiale d'avant en arrière sur la troisième douille (33) afin de séparer les crantages des douilles ;
— un cadran gradué (66) susceptible d'être fixé sur une bride de fixation (9) du cône d'entrée (8) entourant l'arbre (2) vers sa partie amont.

8. Outillage selon la revendication 7, caractérisé en ce qu'une tige de contrôle (65) de longueur supérieure à celle du tube clé (60) est prévue à l'intérieur du tube clé.

9. Procédé de correction de balourd pour la mise en œuvre du dispositif et de l'outillage selon l'une des revendications précédentes, l'amplitude et la direction du balourd résiduel ayant été déterminées et les directions (β1, β2) des balourds composant le balourd de correction ayant été calculées on procède aux opérations suivantes :   .
— mise à zéro du dispositif de correction par rotation dans un premier sens de la troisième douille (33) jusqu'au blocage des doigts (45, 46) des deuxième et troisième douilles l'un contre l'autre et repérage de cette position zéro ;
— rotation d'un angle β1 du dispositif de correction en sens inverse du premier sens, entraînant l'ensemble des troisième et deuxième douilles ;
— vérification de l'entraînement simultané des deuxième et troisième douilles (32, 33) par rotation de quelques degrés dans le premier sens ;
— désaccouplement et éloignement des deuxième et troisième douilles (32, 33) puis rotation dans le premier sens d'un angle suffisant pour que le doigt de la troisième douille passe de l'autre côté du doigt de la deuxième douille ;
— remise en prise des deuxième (32) et troisième (33) douilles et rotation dans le premier sens jusqu'à l'angle β2.

10. Procédé selon la revendication 9, caractérisé en ce que lesdites opérations sont précédées et suivies par la mise en place et le retrait de l'outillage qui comportent les opérations suivantes :
— démontage du cône d'entrée (8) ;
— fixation du cadran gradué (66) sur la bride (9) de fixation du cône ;
— introduction du tube clé (60) dans l'axe de l'arbre (2) de rotor et accouplement dudit tube clé au dispositif de correction ;
— enfoncement de la tige de contrôle (65) pour vérification de l'accouplement tube clé dispositif de

0 153 887

correction :
— correction du balourd résiduel selon la revendication 9 ;
— retrait du tube clé (60) de l'axe de l'arbre (2) ;
— démontage du cadran gradué (66) ;
— fixation du cône d'entrée (8).


## Claims

1. Apparatus for the correction of an imbalance (6) of a rotor of a turbo machine, the said apparatus comprising two masses (40, 44) constituted by elements of discs, comprising teeth and of which the relative angular position can be adjusted against the action of a spring (29) by tool means (7) introduced from the front of the turbo machine, characterized in that the said masses (40, 44) are secured to bushes (32, 33) having at their ends ratched-like teeth (37, 38, 41, 42) of which the teeth have a shape and a direction such that one of the bushes (33) has a single sense of rotation whilst the assembly of the two bushes (32, 33) has a single sense of rotation contrary to that of the said bush (33).

2. Apparatus according to claim 1, characterized in that synchronizing means (45, 46) are provided on the bushes (32, 33) in order to match their relative positions.

3. Apparatus according to claim 2, characterized in that the synchronising means are fingers (45, 46) secured on the bushes (32, 33) in such a manner that during the contact of the masses (40, 44) they are opposed.

4. Apparatus according to one of claims 1 to 3, characterized in that it is mounted within the interior and at the periphery of a coupling bolt (4) of the shafts of two pressure stages and that it comprises at least :
— a blocking sleeve (20) capable of sliding within the bolt (4) and provided with rotary drive means (25, 26) of the bolt and with a collar (21) carrying a series of teeth (22) capable of cooperating with a corresponding series of teeth (23) provided on the inner wall of the shaft (2) of the pressure stage ;
— a first compression spring (29) surrounding a part (27) of the blocking sleeve (20) applied at one end to a step (28) of the sleeve and at the other end on a shoulder (18) of the coupling bolt (4) ;
— a first bush (31) held fixed within the bolt (4) and having on its downstream edge a series of ratchet teeth (37) ;
— a second bush (32) of which the upstream edge carries a series of ratchet teeth (38) corresponding to the series of ratchet teeth (37) and the downstream edge another series of ratchet teeth (41), a mass (40) being secured on a part of the inner wall of the bush (32) ;
— a third bush (33) of which the upstream edge carries a series of ratchet teeth (42) corresponding to the series of teeth (41) of the downstream edge of the bush (32), a mass (44) being secured on the part of the inner wall of the bush (33), the downstream part of the bush carrying axial locking means of the bush (33) to the sleeve (20) and coupling means (49, 50), with tool means for adjustment.

5. Apparatus according to claim 4, characterized in that the masses (40, 44) are secured within cylindrical cages (39, 43) provided within the second and third bushes (32, 33).

6. Apparatus according to claim 5, characterized in that a second compression spring (55) is provided between the annular external downstream face (58) of the cage (39) of the second bush (32) and the annular outer upstream face (59) of the cage (43) of the third bush (33), the said spring having a force equal to about one half of that of the first spring (29).

7. Tool means for the correction of an imbalance adapted for apparatus according to one of the preceding claims, characterized in that it comprises :
— a tubular key (60) of which one end carries coupling means (62) capable of cooperating with the coupling means (49, 50) of the third bush (33) of the correction apparatus and of which the other end is provided with an indicating pointer (64) secured perpendicularly to the axis of the tube and in a predetermined radial position with respect to the coupling means and of a connecting collar (63) enabling an axial pressure to be exerted from the front to the rear on the third bush (33) in order to separate the ratchet teeth arrays of the bushes ;
— a graduated scale (66) capable of being mounted on a securing flange (9) of the inlet cone (8) surrounding the shaft (2) around its upstream part.

8. Tooling means according to claim 7, characterized in that a control rod (65) of a length in excess of that of the tubular key (60) is provided within the tubular key.

9. Method for the correction of an imbalance for the use of the apparatus and the tooling according to one of the preceding claims, the amplitude and the direction of the residual imbalance having been predetermined and the directions (1, 2) of the imbalances forming components of the imbalance correction having been calculated one then proceeds to the following operations :
— return to zero of the correction apparatus by rotation in a first sense of the third bush (33) until blockage of the fingers (45, 46) of the second and of the third bushes the one against the other and resumption of this zero position ;
— rotation through an angle 1 of the correction device in the reverse sense to the first sense, driving the assembly of the third and second bushes ;

7

— verification of the simultaneous driving of the second and third bushes (32, 33) by rotation through several degrees in the first sense ;

— uncoupling and spacing of the second and third bushes (32, 33) then rotation in the first sense through an angle sufficient such that the finger of the third bush passes from the other side of the finger to that of the second bush ;

— return to use of the second (32) and third (33) bushes in rotation in the first sense through an angle 2.

10. Method according to claim 9, characterized in that the said operations are preceded and followed by location and by withdrawal of the tooling which comprise the following operations :

— disassembly of the inlet cone (8) ;

— securing of the graduated scale (66) on to the flange (9) of the securing cone ;

— introduction of the tubular key (60) on the axis of the shaft (2) of the rotor and coupling of the said tubular key to the correction apparatus ;

— utilisation of the control rod (65) for verification of the coupling of the tubular key of the correction apparatus ;

— correction of the residual imbalance according to claim 9 ;

— withdrawal of the tubular key (60) from the axis of the shaft (2) ;

— disassembly of the graduated scale (66) ;

— securing of the inlet cone (8).

**Patentansprüche**

1. Vorrichtung zur Korrektur der Umwucht eines Turbomaschinenläufers mit zwei von Scheibenelementen gebildeten Ausgleichsgewichten (40, 44) mit Verzahnungen, deren relative Winkelposition durch ein von vorn in die Turbomaschine eingeführtes Werkzeug (7) gegen die Wirkung einer Feder (29) veränderbar ist, dadurch gekennzeichnet, daß die genannten Ausgleichsgewichte (40, 44) an Ringbuchsen (32, 33) befestigt sind, die an ihren Enden Rastverzahnungen (37, 38, 41, 42) aufweisen, deren Zähne derart geformt und gerichtet sind, daß die eine Ringbuchse (33) sich nur in einer einzigen Richtung drehen läßt, während die aus beiden Ringbuchsen (32, 33) bestehende Gesamtanordnung sich nur in der entgegengesetzten Richtung drehen läßt.

2. Vorrichtung nach Anspruch 1, dadurch gekennzeichnet, daß an den Ringbuchsen (32, 33) Markierungsmittel (45, 46) vorgesehen sind, die eine Markierung ihrer Relativposition ermöglichen.

3. Vorrichtung nach Anspruch 2, dadurch gekennzeichnet, daß die Markierungsmittel aus Fingern (45, 46) bestehen, die an den Ringbuchsen (32, 33) derart befestigt sind, daß bei ihrer Berührung die Ausgleichsgewichte (40, 44) diametral entgegengesetzte Positionen einnehmen.

4. Vorrichtung nach einem der Ansprüche 1 bis 3, dadurch gekennzeichnet, daß sie im Innern und an der Peripherie einer Kupplungsschraube (4) zur Verbindung der Wellen zweier Druckstufen montiert ist und wenigstens folgende Teile umfaßt :

— eine in der Schraube (4) gleitbar angeordnete Blockierhülse (20) mit Mitteln (25, 26) für den Drehantrieb der Schraube sowie mit einem Bund (21), der eine Verzahnung (22) trägt, die mit einer an der Innenwandung der Welle (2) der Druckstufe vorgesehenen homologen Verzahnung (23) zusammenwirken kann,

— eine erste Kompressionsfeder (29), die einen Teil (27) der Blockierhülse (20) umgibt und die sich mit einem Ende gegen einen Absatz (28) der Blockierhülse und mit dem anderen Ende gegen eine Schulter (18) der Kupplungsschraube (4) abstützt,

— eine erste Ringbuchse (31), die in der Kupplungsschraube (4) fest gehalten ist und an ihrem stromabwärtigen Rand eine Rastverzahnung (37) aufweist,

— eine zweite Ringbuchse (32), deren stromaufwärtiger Rand eine zur Rastverzahnung (37) der ersten Ringbuchse homologe Rastverzahnung (38) trägt und deren stromabwärtiger Rand eine weitere Rastverzahnung (41) trägt, wobei ein Ausgleichsgewicht (40) an einem Teil der Innenwandung der zweiten Ringbuchse (32) befestigt ist,

— sowie eine dritte Ringbuchse (33), deren stromaufwärtiger Rand eine zur Rastverzahnung (41) des stromabwärtigen Randes der zweiten Ringbuchse (32) homologe Rastverzahnung (42) trägt, wobei ein weiteres Ausgleichsgewicht (44) an einem Teil der Innenwandung der dritten Ringbuchse (33) befestigt ist und der stromabwärtige Teil dieser Ringbuchse (33) Mittel zu ihrer axialen Verriegelung an der Blockierhülse (20) sowie Mittel (49, 50) zur Kupplung mit einem Werkzeug zur Unwuchtkorrektur trägt.

5. Vorrichtung nach Anspruch 4, dadurch gekennzeichnet, daß die Ausgleichsgewichte (40, 44) in zylindrischen Käfigen (39, 43) fixiert sind, die an der zweiten und der dritten Ringbuchse (32, 33) vorgesehen sind.

6. Vorrichtung nach Anspruch 5, dadurch gekennzeichnet, daß zwischen der stromabwärtigen ringförmigen Außenseite (58) des Käfigs (39) der zweiten Ringbuchse (33) und der stromaufwärtigen ringförmigen Außenseite (59) des Käfigs (43) der dritten Ringbuchse eine zweite Kompressionsfeder (55) angeordnet ist, deren Federkraft etwa halb so groß ist wie diejenige der ersten Feder (29).

7. Werkzeug zur Unwuchtkorrektur, das an die Vorrichtung nach einem der vorhergehenden Ansprüche angepaßt ist, gekennzeichnet durch

— einen Rohrschlüssel (60), der an einem Ende Kupplungmittel (62) für das Zusammenwirken mit den Kupplungsmitteln (49, 50) der dritten Ringbuchse (33) der Vorrichtung zur Unwuchtkorrektur trägt und dessen anderes Ende mit einem senkrecht zur Achse des Rohrschlüssels in einer gegenüber den Kupplungsmitteln festgelegten radialen Position fixierten Markierungszeiger (64) sowie mit einem Stützkragen (63) ausgestattet ist, der es ermöglicht, einen von vorn nach hinten gerichteten axialen Druck auf die dritte Ringbuchse (33) auszuüben, um die Rastverzahnungen der Ringbuchsen voneinander zu lösen,

— sowie eine Gradskala (66), die auf einem Befestigungsflansch (7) des die Welle (2) in ihrem stromaufwärtigen Teil umgebenden Eintrittskonus' (8) fixierbar ist.

8. Werkzeug nach Anspruch 7, dadurch gekennzeichnet, daß im Innern des Rohrschlüssels (60) ein Prüfstab (65) angeordnet ist, dessen Länge größer ist als diejenige des Rohrschlüssels (60).

9. Verfahren zur Unwuchtkorrektur für die Benetzung der Vorrichtung und des Werkzeugs nach einem der vorhergehenden Ansprüche, dadurch gekennzeichnet, daß nach der Bestimmung der Amplitude und der Richtung der Restunwucht und nach der Berechnung der Richtungen ($\beta_1$, $\beta_2$) der Komponenten der Unwucht folgende Operationen durchgeführt werden :

— Nullsetzen der Vorrichtung zur Unwuchtkorrektur durch Drehen der dritten Ringbuchse (33) in einer ersten Richtung, bis die Finger (45, 46) der zweiten und der dritten Ringbuchse einander blockieren, und Markieren der Nullposition ;

— Drehen der Vorrichtung zur Unwuchtkorrektur um einen Winkel $\beta_1$ in der zu der ersten Richtung entgegengesetzten Richtung, wobei die aus der dritten und der zweiten Ringbuchse bestehende Gesamtanordnung mitgenommen wird ;

— Nachprüfen der gleichzeitigen Mitnahme der zweiten und der dritten Ringbuchse (32, 33) durch Drehen um einige Grad in der ersten Richtung ;

— Entkuppeln und Trennen der zweiten und dritten Ringbuchse (32, 33), sodann Drehen in der ersten Richtung um einen Winkel, der so groß ist, daß der Finger der dritten Ringbuchse auf die andere Seite des Fingers der zweiten Ringbuchse gelangt ;

— erneutes Ineingriffbringen der zweiten (32) und dritten Ringbuchse (33) und Drehen in der ersten Richtung bis zu dem Winkel $\beta_2$.

10. Verfahren nach Anspruch 9, dadurch gekennzeichnet, daß den genannten Operationen das Einsetzen und das Herausziehen des Werkzeugs vorangeht bzw. folgt, wobei folgende Operationen durchgeführt werden :

— Demontieren des Eintrittskonus' (8) ;

— Fixieren der Gradskala (66) an dem Befestigungsflansch (9) des Eintrittskonus' ;

— Einführen des Rohrschlüssels (60) in die Achse der Läuferwelle (2) und Kuppeln des Rohrschlüssels mit der Vorrichtung zur Unwuchtkorrektur ;

— Eindrücken des Prüfstabes (65) zur Überprüfung der Verbindung zwischen Rohrschlüssel und Vorrichtung zur Unwuchtkorrektur ;

— Korrektur der Restunwucht nach Anspruch 9 ;

— Herausziehen des Rohrschlüssels (60) aus der Achse der Welle (2) ;

— Demontieren der Gradskala (66) ;

— Befestigen des Eintrittskonus' (8).

FIG.:1

0 153 887

FIG.:2B

FIG.:2A

FIG.:3

7

35

31      32      33

60

37      38      41      42

67

FIG.:4

31      32      33

45   46

41      42

45

40

FIG.:5

FIG.:6

50

44

*DOUILLE 32*

FIG.:8

*DOUILLE 33*

Aiguille

Aiguille

$B_1 = \theta + \alpha$

$B_2 = \theta - \alpha$

0

$\theta$

$-\alpha$

$\vec{B}$

Douille 32

$\vec{B}$

$\vec{b}$

Douille 33

$+90°$

$-90°$

$+\alpha$

$-90°$

Aiguille
pour la
douille 33

Aiguille
pour la douille32

$+90°$

Balourd   $\vec{b}$

FIG.:7A

Balourd   $\vec{b}$

FIG.:7B

3